# EUROPEAN PATENT APPLICATION

(11) **EP 4 748 816 A1**
(43) Date of publication of application: **27.05.2026**
(21) Application number: 25196515.8
(22) Date of filing: 18.08.2025
(51) Int. Cl.: C05D 1/00, C05D 3/00, C05D 5/00, C05D 9/02, C05F 9/04, C05F 11/00, C05F 11/02, C05G 5/35

(54) **A FERTILIZER COMPRISING BIOMASS AND A METHOD OF ITS MANUFACTURING**

(30) Priority: 22.11.2024 PL 45033624
(71) Applicant: EVERGREEN SOLUTIONS SPOLKA Z OGRANICZONA ODPOWIEDZIALNOSCIA, 74-200 Pyrzyce (PL)
(72) Inventor: Zakrzewski, Janusz, 74-200 Pyrzyce (PL)
(74) Representative: Krekora, Magdalena

(57) **Abstract**

A method of manufacturing a fertilizer comprising biomass, consists in that the biomass comprising, in dry matter, simple and complex proteins in an amount from 8 to 30% by weight and phosphorus compounds in an amount from 1 to 3% by weight P2O5, is mixed with at least one carbonaceous raw material selected from the group comprising lignite, bark, sawdust, humus, compost, peat and straw in an amount of 5 to 20% by weight in relation to the biomass, is ground to a particle size of less than 5 mm to produce a pulp with a dry matter content from 10 to 70%, then the resulting pulp is mixed with at least one evaporite mineral selected from the group comprising polyhalite, calcite, dolomite, gypsum, anhydrite, carnallite, sylvite, barite, after which the whole is dehydrated to a dry matter content from 40 to 85%, then mixed with alkaline raw materials in an amount sufficient to control the temperature of the mixture in the range from 60 to 140°C and obtain a moisture content of less than 30%, preferably 10 to 15%, and then the product obtained is granulated to obtain granules with sizes from 1 to 5 mm, and alkaline raw materials forming inorganic coatings are applied to the surface of the granules, after which a substance forming an outer coating is sprayed.

## Description

The invention relates to a fertilizer comprising biomass and a method of its manufacturing.

Fertilisers are a key element of effective agricultural production. They provide plants with essential nutrients, enrich the soil with organic matter, improving its structure and water retention capacity, all of which contributes to higher yields and better quality of agricultural products.

Waste biomass is characterised by a high content of nutrients and organic matter. Biomass contains nitrogen, phosphorus, potassium and microelements that are essential for healthy plant growth, while organic matter increases soil fertility and improves its physical and chemical properties. The use of biomass for fertiliser purposes increases the activity of microorganisms. Biomass promotes the development of beneficial microorganisms that support humification processes and enrich the soil.

The use of biomass as a fertiliser supports sustainable agriculture by reducing the need for synthetic fertilisers. The use of biomass also allows for the management of organic waste through processing.

Due to the precision of dosing, stability and regulation of the release of nutrients, granular fertilisers are most commonly used.

Granular fertilisers are easy to transport and apply, allowing for even distribution across the field. The granules enable precise dosing, which allows for control of the amount of nutrients supplied to the plants. Many granular fertilisers have controlled release, which means that nutrients are gradually available to plants, reducing the risk of leaching and losses.

Granular fertilisers are also more resistant to moisture and other environmental factors, which facilitates their storage and prolongs their effectiveness.

Thanks to these advantages, granular fertilisers have become a popular choice in modern agriculture.

Polish patent PL229206 discloses a fertiliser consisting of crushed, dried and sterilised biomass, which is a source of nutrients such as simple and complex proteins, phosphorus, potassium, sulphur compounds, and a source of carbonaceous organic matter, as well as alkaline substances being calcium hydroxide and/or a mixture of calcium hydroxide and oxide.

A publication by Janne Pesonen, Ville Kuokkanen, Toivo Kuokkanen, Mirja Illikainen "Co-granulation of bio-ash with sewage sludge and lime for fertilizer use", Journal of Environmental Chemical Engineering, 4, 4, Part B, 2016, 4817-4821 discloses the results of co-granulation of ash with sewage sludge and lime. The concentrations of nutrients (Ca, K and P) in the obtained fertiliser product were high. The addition of lime improved the neutralising capacity of the tested granules, and the addition of sewage sludge increased the nitrogen content.

Document FI128228B discloses an invention relating to a granular fertiliser or soil improver comprising a biological core matrix (nitrogen in the form of pH-sensitive ammonium) with at least one nitrogen compound, a neutral barrier layer (consisting of kaolin, talc, bentonite, silica, silicate, sugar suspension, polylactic acid (PLA), bioplastics, neutral or acidic geopolymers and matter of biological origin) and an alkaline barrier layer (consisting of at least one of ash, calcium carbonate, magnesium oxide, quicklime, calcium oxide, slag and alkali-activated geopolymers).

The state of the art also includes methods for protecting granular fertilisers against the adverse effects of transport and storage conditions and for influencing the release of nutrients over time by them.

US patent application US20150376077A1 discloses a composition of a controlled-release solid fertiliser, consisting of a water-soluble fertiliser component (nitrogen fertilisers such as urea, ammonium nitrate, ammonium magnesium nitrate, ammonium chloride, ammonium sulphate, ammonium phosphate and others) and at least three layers of an insoluble coating formed by the reaction of polyisocyanate and polyol, followed by a coating of organic wax (e.g. wax, fatty acid, fatty acid salt, fatty acid ester, higher alcohol, silicone and mixtures thereof).

Patent document KR100426922B1 discloses fertiliser granules (NP, NK, PK and NPK) coated with an ethylene copolymer.

Patent document US3477842A discloses a method of manufacturing a loose fertiliser product (urea, ammonium nitrate, ammonium sulphate, ammonium phosphate, superphosphate and superphosphate) by coating granules by spraying an alkaline urea solution with formaldehyde onto their surface.

The authors of patent description WO1996004221 describe a method of obtaining a coated fertiliser with neutralising properties, which consists of urea and/or its derivatives coated with a mixture of a liming agent comprising magnesium and gypsum and, optionally, other fertiliser components.

The patent description PL234514 provides a method of manufacturing a fertiliser with reduced tendency to caking and increased grain hardness, consisting in the manufacturing of a multi-component coating on the surface of the fertiliser granules. The coating is made from a mixture of phosphoric acid (V), ammonium sulphate and water, and a neutralising agent being a magnesite, burnt lime, limestone and/or dolomite. The fertiliser is also enriched with humic substances in introduced the form of acids and/or salts and/or in the form of lignite.

Invention CN101362662B discloses a slow-release fertiliser coating consisting of humate, natural gum, modified starch, urea, manganese sulphate, green copper, boric acid, sodium molybdate, organic acids and ammonium citrate.

A method of manufacturing a fertilizer comprising biomass, according to the invention is characterized in that the biomass comprising, in dry matter, simple and complex proteins in an amount from 8 to 30% by weight and phosphorus compounds in an amount from 1 to 3% by weight P₂O₅, is mixed with at least one carbonaceous raw material chosen from the group comprising lignite, bark, sawdust, humus, compost, peat and straw in an amount of 5 to 20% by weight in relation to the biomass, is ground to a particle size of less than 5 mm to produce a pulp with a dry matter content from 10 to 70%, then the resulting pulp is mixed with at least one evaporite mineral selected from the group comprising polyhalite, calcite, dolomite, gypsum, anhydrite, carnallite, sylvite, barite, after which the whole is dehydrated to a dry matter content from 40 to 85%, then mixed with alkaline raw materials in an amount sufficient to control the temperature of the mixture in the range from 60 to 140°C and obtain a moisture content of less than 30%, preferably 10 to 15%, and then the product obtained is granulated to obtain granules with sizes from 1 to 5 mm, and alkaline raw materials forming inorganic coatings are applied to the surface of the granules, after which a substance forming an outer coating is sprayed.

Preferably before being added to the biomass, at least one evaporite material is mixed with at least one material constituting a source of mineral compounds selected from the group comprising biomass combustion ash, ammonium nitrate, urea, calcium nitrate, superphosphate, ammonium phosphate, ammonium sulfate, potassium sulfate, potassium chloride, struvite, bentonite, apatites, phosphates, microelement compounds of copper, zinc, iron, manganese and boron.

Preferably the evaporite material or a mixture of the evaporite material and the material constituting a source of mineral compounds is used in an amount from 20 to 55% by weight in relation to the biomass.

Preferably calcium oxide and/or calcium carbonate is used as alkaline raw materials mixed with biomass in an amount of up to 40% by weight in relation to the biomass.

Preferably calcium oxide, calcium hydroxide, magnesium oxide, potassium hydroxide, and biomass combustion ash are used as ingredients of the inorganic coating.

Preferably the coating is formed from biomass combustion ash in an amount from 0 to 80% by weight, calcium oxide in an amount from 10 to 60% by weight, calcium hydroxide from 10 to 25% by weight and supplemented to 100% by weight with magnesium oxide and potassium hydroxide in a mass ratio of 1:1.

Preferably beet molasses or cane molasses is used as the substance forming the outer coating of the granules.

The object of the present invention is also a fertilizer comprising biomass, which is characterized in that it is in the form of granules with a coating-core structure, wherein the core is a mixture of comminuted, dried and sterilized biomass comprising proteins in an amount from 1 to 30% by weight and phosphorus compounds in an amount from 0.5 to 3% by weight of P₂O₅, at least one carbonaceous raw material and at least one evaporite material and, optionally, at least one material constituting a source of mineral compounds, which mixture constitutes from 60 to 95% by weight of the core, and a mixture of calcium oxide and calcium hydroxide or calcium carbonate, which constitutes from 5 to 40% by weight of the core, the coating comprises alkaline compounds and its weight constitutes between 2 and 40% of the core weight, preferably 10%, and the coating is formed by a water-soluble substance protecting the alkaline compounds forming the coating before carbonization, whose weight constitutes from 0.5 to 5% of the core weight.

Preferably the carbonaceous raw material constitutes from 5 to 20% by weight of the biomass.

Preferably the evaporite material or the mixture of evaporite materials constitutes from 20 to 55% by weight of the biomass.

The biomass used in the invention is a mixture of biological waste selected from a group comprising plant waste, fruit waste, vegetable waste, manure, slurry, poultry litter, feathers, bones, animal tissue, snails, earthworms, insects and larvae farming residues, mushroom cultivation residues, biogas production residues, milk processing residues, brewer's grains, distiller's grains, by-products from fish, seafood, algae and seaweed processing and farming.

Preferably lignite, bark, sawdust, humus, compost, peat and straw are used as carbonaceous raw materials.

Preferably carbonaceous raw materials are used in quantities of 5 to 20% by weight in relation to biomass.

Preferably, the evaporite material or mixture of evaporite materials constitutes between 20 and 55% of the biomass weight.

Preferably polyhalite, calcite, dolomite, gypsum, anhydrite, carnallite, sylvite and barite are used as evaporite materials.

Preferably biomass combustion ash, ammonium nitrate, urea, calcium nitrate, superphosphate, ammonium phosphate, ammonium sulfate, potassium sulfate, potassium chloride, struvite, bentonite, apatites, phosphates, microelement compounds of copper, zinc, iron, manganese and boron are used as materials constituting a source of mineral compounds.

Preferably calcium oxide and/or calcium carbonate in an amount of up to 40% by weight of the biomass is used as alkaline raw materials mixed with the biomass.

Preferably calcium oxide, calcium hydroxide, magnesium oxide, potassium hydroxide and biomass combustion ash are used as components of the inorganic coating.

Preferably the coating is made of biomass combustion ash in an amount of 0 to 80% by weight, calcium oxide in an amount of 10 to 60% by weight, calcium hydroxide in an amount of 10 to 25% by weight, and supplemented to 100% by weight with magnesium oxide and potassium hydroxide in a mass ratio of 1:1.

Beet molasses and/or cane molasses are preferably used as the substance forming the outer coating of the granules.

The granular biomass fertiliser according to the invention effectively provides a source of nutrients for plants and ensures soil alkalisation. Evaporated minerals dissolve in water and then precipitate in simpler systems, which are not only a source of macroelements but also the supporting structure of the granules. Carbon materials are not only a source of carbon, but also adsorb and reduce the conversion of ammonium nitrogen to nitrate and the release of hydrogen ions, delaying soil acidification. The compounds included in the coating form a porous coating that does not slow down the dissolution of the fertiliser, but reduces its tendency to clump and limits its susceptibility to moisture penetration. The properties of molasses give the coating barrier properties against atmospheric CO₂, which causes carbonisation of the mineral coating, which could slow down the dissolution of the granules and limit the fertiliser's ability to alkalise the soil.

The method according to the invention is carried out in order to manufacture a granular fertiliser from waste biomass. The resulting fertiliser granules show a reduced tendency to clump. The barrier properties of the granule coating against atmospheric CO₂ prevent carbonisation of the mineral coating, thus guaranteeing effective dissolution of the granules and alkalisation of the soil.

Furthermore, in the method of manufacturing the fertiliser according to the invention, it is important that calcium does not convert to CaCO₃, thus the fertiliser according to the invention does not lose its rapid soil deacidification properties. It still comprises Ca(OH)₂, which is nearly eighty times more soluble in water than CaCO₃. The addition of a molasses coating extends the shelf life of the product and improves its quality.

The subject of the invention is illustrated by the following examples:

### Example 1

1000 kg of biomass raw material (30% by weight of simple and complex proteins, 3% by weight of P₂O₅) is mixed with 100 kg of carbonaceous raw material being lignite and ground to a particle size of less than 5 mm to produce a pulp with a dry matter content of 65%. The resulting pulp is then mixed with 200 kg of evaporite mineral being polyhalite. The pulp is then mixed with 150 kg of alkaline raw material, which is calcium oxide. As a result of the exothermic process, the temperature of the system rose to 95°C. The exothermic process and the binding of moisture to calcium hydrate resulted in a moisture content of 15% in the material.

The product was granulated to obtain granules with an average size of 3 mm. During granulation process, alkaline raw materials were applied to the surface of the granules to form inorganic coatings. A mixture of biomass combustion ash and reactive calcium oxide in a mass ratio of 1:4 was used in an amount of 10% by weight of the fertiliser granules. Next, beet molasses was applied by spraying to the granulated material to form an outer coating. Molasses was used in an amount of 2.5% by weight of the granules.

As a result of the process a granulated fertiliser was obtained in the form of granules with a shell-coating-core structure, where the core consists of 60% by weight of crushed, dried and sterilised biomass comprising 30% by weight of protein and 3% by weight of phosphorus compounds (calculated as P₂O₅) and 10% of a mixture of calcium oxide and calcium hydroxide, the shell comprises alkaline compounds and its weight constitutes 10% of the core weight, and the coating is formed by a water-soluble substance protecting the alkalis forming the shell against carbonisation, whose weight constitutes 2.5% of the core weight.

### Example 2

1000 kg of biomass raw material (8% simple and complex proteins by weight, 1% by weight P₂O₅) is mixed with 100 kg of carbonaceous raw material in the form of a mixture of lignite with sawdust and compost and ground to a particle size of less than 5 mm to produce a pulp with a dry matter content of 70%. The resulting pulp is then mixed with 200 kg of evaporite mineral being polyhalite. The mixture is enriched with mineral compounds comprised in 150 kg of biomass combustion ash. The pulp is then mixed with 200 kg of alkaline raw material, which is reactive calcium carbonate. As a result of the exothermic process, the temperature of the system rose to 70°C. The exothermic process and moisture binding allowed the moisture content of the material to be reduced to 15%.

The product was granulated to obtain granules with a size of 3-5 mm. During granulation process, alkaline raw materials forming inorganic coatings were applied to the surface of the granules in an amount of 10% by weight in relation to the weight of the fertiliser granules. A mixture of biomass combustion ash in the amount of 50% by weight, calcium oxide 20% by weight, calcium hydroxide 10% by weight, magnesium oxide 10% by weight and potassium hydroxide 10% by weight was used. Next, beet molasses was sprayed onto the granulated material to form an outer coating. The molasses was used in an amount of 5% by weight of the granules.

As a result of the process a granulated fertiliser was obtained in the form of granules with a shell-coating-core structure, where the core consists of 50% by weight of crushed, dried and sterilised biomass, and the core comprises 4% by weight of protein and 0.5% by weight of phosphorus compounds (calculated as P₂O₅) and 13% calcium carbonate by weight, the coating comprises alkaline compounds and its weight constitutes 10% of the core weight, and the shell is formed by a water-soluble substance protecting the alkaline compounds in the coating against carbonisation, whose weight constitutes 5% of the core weight.

### Example 3

1000 kg of biomass raw material (30% by weight of simple and complex proteins, 3% by weight of P₂O₅) is mixed with 100 kg of carbonaceous raw material being lignite and ground to a particle size of less than 5 mm to obtain a pulp with a dry matter content of 60%. The resulting pulp is then mixed with 200 kg of evaporite mineral being a mixture of polyhalite and carnallite calcite. The pulp is then mixed with 200 kg of alkaline raw material, which is calcium oxide. As a result of the exothermic process, the temperature of the system rose to 110°C. The exothermic process and the binding of moisture to calcium hydrate resulted in a moisture content of 15% in the material.

The product was granulated to obtain granules with an average size of 3 mm. During granulation process, alkaline raw materials were applied to the surface of the granules to form inorganic coatings. Calcium oxide was used in an amount of 10% by weight in relation to the weight of the fertiliser granules. Next, cane molasses was applied by spraying to the granulated material to form an outer coating. Molasses was used in an amount of 0.5% by weight of the granules.

The process resulted in a granulated fertiliser in the form of granules with a shell-coating-core structure, where the core consists of 55% by weight of crushed, dried and sterilised biomass, and the core comprises 16% by weight of proteins and 1.6% by weight of phosphorus compounds (calculated as P₂O₅) and 10% by weight of a mixture of calcium oxide and calcium hydroxide, the coating comprises alkaline compounds and its weight constitutes 10% of the core weight, and the shell is formed by a water-soluble substance protecting the alkaline compounds forming the coating against carbonisation, the weight of which constitutes 0.5% of the core weight.

### Test results

Comparative tests were carried out on the fertiliser obtained in accordance with the invention and the fertiliser covered by patent PL229206. The test results are presented in the table below.

| **Ingredients** | PL229206 | **The fertiliser according to the invention** |
|---|---|---|
| Nitrogen (N) | 0,40 % by weight | 0,68 % by weight |
| Phosphorus calculated as P₂O₅ | 0,30 % by weight | 0,72 % by weight |
| Calcium calculated as CaO | 0,10 % by weight | 27,2 % by weight |

The fertiliser according to the invention has an increased amount of phosphorus, nitrogen and calcium. The improved granulation method prevents calcium from converting to CaCO₃, thanks to which the fertiliser retains better parameters, including its soil deacidification capacity. The use of molasses extends the shelf life of the product and improves its quality.

## Claims

1. A method of manufacturing a fertilizer comprising biomass, **characterized in that** the biomass comprising, in dry matter, simple and complex proteins in an amount from 8 to 30% by weight and phosphorus compounds in an amount from 1 to 3% by weight P₂O₅, is mixed with at least one carbonaceous raw material selected from the group comprising lignite, bark, sawdust, humus, compost, peat and straw in an amount of 5 to 20% by weight in relation to the biomass, is ground to a particle size of less than 5 mm to produce a pulp with a dry matter content from 10 to 70%, then the resulting pulp is mixed with at least one evaporite mineral selected from the group comprising polyhalite, calcite, dolomite, gypsum, anhydrite, carnallite, sylvite, barite, after which the whole is dehydrated to a dry matter content from 40 to 85%, then mixed with alkaline raw materials in an amount sufficient to control the temperature of the mixture in the range from 60 to 140°C and obtain a moisture content of less than 30%, preferably 10 to 15%, and then the product obtained is granulated to obtain granules with sizes from 1 to 5 mm, and alkaline raw materials forming inorganic coatings are applied to the surface of the granules, after which a substance forming an outer coating is sprayed.

2. The method according to claim 1, **characterized in that**, before being added to the biomass, at least one evaporite material is mixed with at least one material constituting a source of mineral compounds selected from the group comprising biomass combustion ash, ammonium nitrate, urea, calcium nitrate, superphosphate, ammonium phosphate, ammonium sulfate, potassium sulfate, potassium chloride, struvite, bentonite, apatites, phosphates, microelement compounds of copper, zinc, iron, manganese and boron.

3. The method according to claim 1 or 2, **characterized in that** the evaporite material or a mixture of the evaporite material and the material constituting a source of mineral compounds is used in an amount from 20 to 55% by weight in relation to the biomass.

4. The method according to any of claims 1-3, **characterized in that** calcium oxide and/or calcium carbonate is used as alkaline raw materials mixed with biomass in an amount of up to 40% by weight in relation to the biomass.

5. The method according to any of claims 1-4, **characterized in that** calcium oxide, calcium hydroxide, magnesium oxide, potassium hydroxide, and biomass combustion ash are used as ingredients of the inorganic coating.

6. The method according to claim 5, **characterized in that** the coating is formed from biomass combustion ash in an amount from 0 to 80% by weight, calcium oxide in an amount from 10 to 60% by weight, calcium hydroxide from 10 to 25% by weight and supplemented to 100% by weight with magnesium oxide and potassium hydroxide in a mass ratio of 1:1.

7. A method according to any of claims 1-6, **characterized in that** beet molasses or cane molasses is used as the substance forming the outer coating of the granules.

8. A fertilizer comprising biomass, **characterized in that** it is in the form of granules with a shell-coating-core structure, wherein the core is a mixture of comminuted, dried and sterilized biomass comprising proteins in an amount from 1 to 30% by weight and phosphorus compounds in an amount from 0.5 to 3% by weight of P₂O₅, at least one carbonaceous raw material and at least one evaporite material and, optionally, at least one material constituting a source of mineral compounds, which mixture constitutes from 60 to 95% by weight of the core, and a mixture of calcium oxide and calcium hydroxide or calcium carbonate, which constitutes from 5 to 40% by weight of the core, the coating comprises alkaline compounds and its weight constitutes between 2 and 40% of the core weight, preferably 10%, and the shell is formed by a water-soluble substance protecting the alkaline compounds forming the coating against carbonization, whose weight constitutes from 0.5 to 5% of the core weight.

9. The fertilizer according to claim 8, **characterized in that** the carbonaceous raw material constitutes from 5 to 20% by weight of the biomass.

10. The fertilizer according to claim 8 or 9, **characterized in that** the evaporite material or the mixture of evaporite materials constitutes from 20 to 55% by weight of the biomass.
